# EUROPEAN PATENT SPECIFICATION

(11) **EP 3 337 366 B1**
(45) Date of publication and mention of the grant of the patent: **03.06.2020**
(21) Application number: 16837273.8
(22) Date of filing: 12.08.2016
(51) Int. Cl.: A47L 5/12, A47L 9/28, A47L 9/02, A47L 9/14, A47L 9/16, A47L 9/26, H02J 9/00, H02M 7/04

(54) **CLEANER AND CONTROL METHOD THEREOF**
REINIGER UND STEUERUNGSVERFAHREN DAFÜR
NETTOYEUR ET SON PROCÉDÉ DE COMMANDE

(30) Priority: 18.08.2015 KR 20150116220
(43) Date of publication of application: 27.06.2018
(73) Proprietor: LG Electronics Inc., Yeongdeungpo-gu Seoul 07336 (KR)
(72) Inventor: LEE, Soongkeun, Seoul 08592 (KR); KIM, Seongwoo, Seoul 08592 (KR); LEE, Chungill, Seoul 08592 (KR)
(74) Representative: Vossius & Partner Patentanwälte Rechtsanwälte mbB
(86) International application number: PCT/KR2016/008936
(87) International publication number: WO 2017/030331

(56) References cited:
- WO-A1-2008/147106
- WO-A1-2010/126422
- WO-A2-2004/064235
- JP-A- H08 224 198
- JP-A- H11 128 134
- JP-A- 2001 321 306
- JP-A- 2001 339 974
- JP-A- 2003 310 508
- KR-A- 20020 090 109

## Description

### Technical Field

The present disclosure relates to a cleaner, and particularly, to a vacuum cleaner that uses both alternating current (AC) power and direct current (DC) power, thus enhancing user convenience.

### Background Art

In general, a cleaner such as a vacuum cleaner, a steam cleaner, and the like, is a device for sucking air including a foreign object such as dust, or the like, using a motor installed within a main body, removing the foreign object within the main body, and subsequently discharging filtered air.

The cleaner may be classified into a canister type cleaner in which a suction nozzle for sucking dust is provided to be separated from a main body and connected to the main body by a connection unit and an upright type cleaner in which a suction nozzle is rotatably connected to the main body.

In general, a cleaner may include a cleaner body in which a motor is provided, a suction nozzle to which air including a foreign object on a floor is sucked, a pipe allowing air sucked to the suction nozzle to be moved to the cleaner body, and a dust collecting device storing the foreign object separated from the air.

In particular, since the canister-type cleaner generally uses a high output suction motor, it has a cord connected to a commercial power source to receive AC power therefrom to drive the suction motor.

Recently, a canister-type cleaner used in both an AD power source and a DC power source is connected to any one of a commercial power source and a battery to drive a motor. Here, a technique for providing a cleaner which uses both a commercial power source as an AC power source and a battery as a DC power source but does not have a separate switch or sensor is required.

WO 2010/126422 A1 relates to vacuum cleaner and a method for controlling the motor power of a vacuum cleaner. The vacuum cleaner comprises an electric motor and an electric power supply for providing electric power to the electric motor. Furthermore, a voltage measuring means for measuring a motor voltage over the electric motor and a current measuring means for measuring a motor current flowing through the electric motor are provided. The vacuum cleaner further comprises a control means for controlling, based on the measured voltage and the measured current, the electric power provided to the electric motor from the electric power supply towards a target motor power value.

### Technical Problem

Therefore, an aspect of the detailed description is to provide a cleaner capable of using both an AC power source and a DC power source without a separate switch module, and a control method thereof.

Another aspect of the detailed description is to provide a cleaner having a detachable power supply unit to use both an AC power source and a DC power source, and a control method thereof.

### Solution to Problem

The invention is defined by independent claim 1, preferred embodiments are defined by the dependent claims.

To achieve these and other advantages and in accordance with the purpose of this specification, as embodied and broadly described herein, a cleaner may include: a suction nozzle sucking a cleaning target; a suction connection part connected to the suction nozzle and allowing the sucked cleaning target to pass therethrough; and a main body spaced apart from the suction nozzle and having a dust box collecting the cleaning target, wherein the main body includes: a suction force generating unit installed in the main body to generate a suction force; and a power supply unit detachably provided in the main body to apply a voltage to the suction force generating unit, wherein the power supply unit supplies power to the suction force generating unit using any one of a DC voltage and an AC voltage.

The cleaner includes a voltage detecting unit detecting a voltage applied from the power supply unit and a controller controlling an operation of the suction force generating unit on the basis of the detected voltage.

The suction force generating unit may include a motor generating the suction force; and a driving circuit applying a driving voltage to the motor, and the controller may control the driving circuit to maintain an amount of current supplied to the motor to be smaller than a reference current value on the basis of the applied voltage.

The controller may adjust a duty ratio of the driving circuit on the basis of a magnitude of the applied voltage.

When the applied voltage is equal to or greater than the reference voltage value, the controller may reduce the duty ratio of the driving circuit to be smaller than a preset value.

When the applied voltage is smaller than the reference voltage value, the controller may control the driving circuit to increase a duty ratio of the driving circuit to be equal to or greater than the preset value.

The power supply unit may include a first power supply module applying AC power transferred from an external power source to the suction force generating unit.

When the first power supply module is installed in the main body, the controller may control the driving circuit to reduce a current generated by the AC power to maintain an amount of current supplied to the motor to be smaller than the reference current value.

The first power supply module may include: a cord provided to receive the AC power and a cord reel provided to allow the cord to be wound therearound within the main body.

The first power supply module may further include: a rectifying circuit converting the AC power into DC power, and the rectifying circuit may be installed in a hollow portion of the cord reel.

The power supply unit may include a second power supply module having a battery, and the second power supply module may apply DC power generated in the battery to the motor.

When the second power supply module is installed in the main body, the controller may control the driving circuit such that a duty ratio of the driving circuit is greater than a preset duty ratio value.

The cleaner may further include: a dust removing unit removing dust included in sucked air from the air; and a dust storage unit storing the removed dust, wherein the suction force generating unit, the dust removing unit, and the dust storage unit may be installed within the main body.

The cleaner may further include: a conversion unit outputting a specific voltage value using a voltage applied from the voltage supply unit, wherein at least one of the controller and the suction force generating unit may be activated using a specific voltage value output from the conversion unit.

To achieve these and other advantages and in accordance with the purpose of this specification, as embodied and broadly described herein, a control method of a cleaner may include: installing a power supply unit in a main body; detecting a voltage applied from the power supply unit; determining whether the detected voltage is equal to or greater than a reference voltage value; when the detected voltage value is equal to or greater than the reference voltage value, reducing a duty ratio of a driving circuit to be smaller than a preset duty ratio value, and when the detected voltage value is smaller than the reference voltage value, increasing the duty ratio of the driving circuit to be equal to or greater than the preset duty ratio value.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### Advantageous Effects of Invention

As described above, even though the cleaner according to the present disclosure may be used in both an AC power source and a DC power source, it has the main body formed to have a minimized volume and weight, manufacturing cost thereof may be reduced.

Also, according to the present disclosure, since the user may select any one of an AC power source and a DC power source as a supply power source by simply replacing the power supply unit, user convenience can be increased.

Also, according to the present disclosure, the cleaner can be used in both the AC power source and the DC power source with respect to the same motor, even without a separate switch circuit or an AC/DC detecting sensor for discriminating an AC power source and a DC power source.

Also, according to the present disclosure, since the user may simply change a scheme of power supply, utilization coverage of the cleaner may be maximized.

### Brief Description of Drawings

The accompanying drawings, which are included to provide a further understanding of the invention and are incorporated in and constitute a part of this specification, illustrate exemplary embodiments and together with the description serve to explain the principles of the invention.

In the drawings:
FIG. 1A is a perspective view of a cleaner according to an embodiment.
FIG. 1B is a conceptual view illustrating a specific configuration of a main body of a cleaner according to an embodiment.
FIG. 2 is a block diagram illustrating a configuration of a cleaner according to an embodiment.
FIG. 3A is a block diagram illustrating a configuration of a cleaner that can be connected to a plurality of power supply modules according to an embodiment.
FIG. 3B is a block diagram illustrating a specific configuration of a suction force generating unit illustrated in FIG. 3A.
FIG. 3C is a block diagram illustrating a specific configuration of a first power supply module illustrated in FIG. 3A.
FIG. 3D is a block diagram illustrating a specific configuration of a voltage detecting unit 140 illustrated in FIG. 3A.
FIG. 4 is a flow chart illustrating an embodiment related to a control method of a cleaner according to the present disclosure.
FIG. 5 is a graph illustrating an output of an inverter provided in a cleaner according to the present disclosure.
FIG. 6 is a conceptual view illustrating a specific configuration of a cord reel provided in a cleaner according to the present disclosure.

### Best Mode for Carrying out the Invention

Hereinafter, embodiments of the present disclosure will be described in detail with reference to the accompanying drawings. Here, the terminology used herein is for the purpose of describing particular embodiments only and is not intended to be limiting of the invention. Unless otherwise defined, all terms used herein have the same meaning as commonly understood by one of ordinary skill in the art to which this invention pertains, and should not be interpreted as having an excessively comprehensive meaning nor as having an excessively contracted meaning. If technical terms used herein is erroneous that fails to accurately express the technical idea of the present invention, it should be replaced with technical terms that allow the person in the art to properly understand. The general terms used herein should be interpreted according to the definitions in the dictionary or in the context and should not be interpreted as an excessively contracted meaning.

A cleaner according to an embodiment of the present disclosure is not limited to a specific type of cleaner and a cleaner defined hereinafter may include a canister type cleaner, an upright type cleaner, a drum type cleaner, a handy type cleaner, a flow type cleaner, and the like.

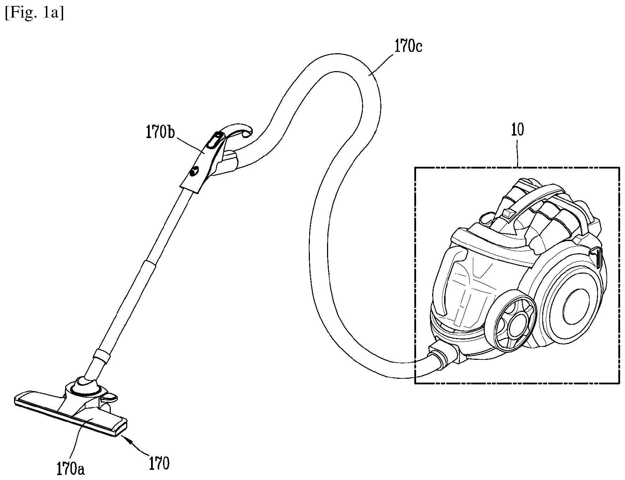

FIG. 1A is a perspective view of a cleaner according to an embodiment.

As illustrated in FIG. 1A, a cleaner according to an embodiment of the present disclosure may include a cleaner body (or a main body) 10, a suction nozzle 170a having a handle and sucking a cleaning target, and a suction connection part 170c connecting the cleaner body 10 and the suction nozzle 170a and guiding the cleaning target to the cleaner body 10. For example, the cleaning target may include a foreign object or dust present around the suction nozzle 170a or a floor.

The cleaner body 10 may include a dust collecting device separately installed therein. The dust collecting device may also be referred to as a dust separating device. The dust collecting device is generally detachably installed on a front side of the cleaner body 10. Suction force is generated according to rotation of the motor, and as air sucked by the generated suction force passes through the dust collecting device, dust is separated therefrom and stored within the dust collecting device. For example, the dust collecting device may be a dust box.

Referring to FIG. 1A, the suction nozzle 170a and the main body 10 may be spaced apart from each other and may be connected to each other by the suction connection part 170c.

Hereinafter, the main body 10 illustrated in FIG. 1A will be described in detail.

A main body suction opening through which air sucked from the suction nozzle 170a may be formed in a front portion of the cleaner body 10, and a main body discharge portion through which air separated from a foreign object is discharged may be formed on one side surface of the cleaner body 10.

Meanwhile, a foreign object separating unit for separating a foreign object included in the air introduced to an interior of the cleaner body 10 may include a cyclone unit (not shown) for separating a foreign object included in the air. In detail, the cyclone unit may include a first cyclone unit first separating a foreign object and a second cyclone unit secondly separating a foreign object from the air from which a foreign object was first separated by the first cyclone unit. Here, the first cyclone unit may be included in the dust collecting device and the second cyclone unit may be included in the cleaner body 10.

However, the present invention is not limited to the cleaner in which a cleaning target and air are separated by using the cyclone unit and may also be applied to a cleaner in which a foreign object is separated according to a different principle.

A chamber accommodating a suction force generating unit 150 is disposed on one side of the cleaner body. The suction force generating unit 150 includes a motor 150a generating a driving force, a driving circuit 150b applying a driving voltage to the motor 150a, and an impeller unit (not shown) generating a suction force according to driving of the motor 150a.

A chamber cover may be provided on one side of the chamber. The chamber cover may shield the chamber in a state in which the suction force generating unit 150 is accommodated within the chamber. Also, an air inlet may be formed in the chamber cover.

Air that flows within the cleaner body is introduced to an interior of the chamber through the air inlet and discharged to the outside through the motor.

Air discharged from the chamber is discharged to the outside of the cleaner through the main body discharge portion.

Meanwhile, the cleaner has a handle allowing a user to operate an operation of the cleaner. Also, the suction unit 170 has a suction nozzle 170a placed on a floor to suck a foreign object and air. A suction hole for sucking a foreign object such as dust, or the like, of the floor and air is provided on a lower surface of suction nozzle 170A. An agitator inducing a foreign object such as dust, or the like, to an inner side of the suction hole is rotatably formed at the suction hole. The suction unit 170 may further include an extending pipe connecting the handle and the suction nozzle 170a.

One side of the suction connection part 170c is connected to the suction unit 170 and the other side thereof is connected to the cleaner body 10. The suction connection part 170c may be in a form of bellows (or flexible type). Also, the suction connection part 170c may be formed of a synthetic resin.

Meanwhile, the cleaner may include a power supply unit 130 to supply power to at least one of the components included in the cleaner. For example, the power supply unit 130 may apply any one of a DC voltage and an AC voltage to the suction force generating unit 150.

That is, the power supply unit 130 may include a first power supply module supplying AC power supplied from an external power supply device or a commercial power source directly to at least one component included in the cleaner. The first power supply module may include a rectifying circuit converting AC power into DC power, a cord transmitting AC power from the commercial power source, and a cord reel provided to allow the cord to be wound therearound.

Also, the power supply unit 130 may include a second power supply module supplying DC power supplied from a battery to at least one component included in the cleaner. That is, the second power supply module may include a battery and a power source terminal and apply power to the suction force generating unit 150 using DC power generated by the battery.

Meanwhile, the power supply unit 130 may store power supplied from the external power supply device in the battery and supply the stored power to at least one component included in the cleaner. Here, the battery may be supplied with power from the external power supply device according to a wired/wireless charging scheme. That is, the battery may be directly connected to the external power supply device by a component such as an electric outlet or may be wirelessly connected to the external power supply device using any one of a magnetic resonance coupling method, an electromagnetic induction method, and a radiowave method, to receive power.

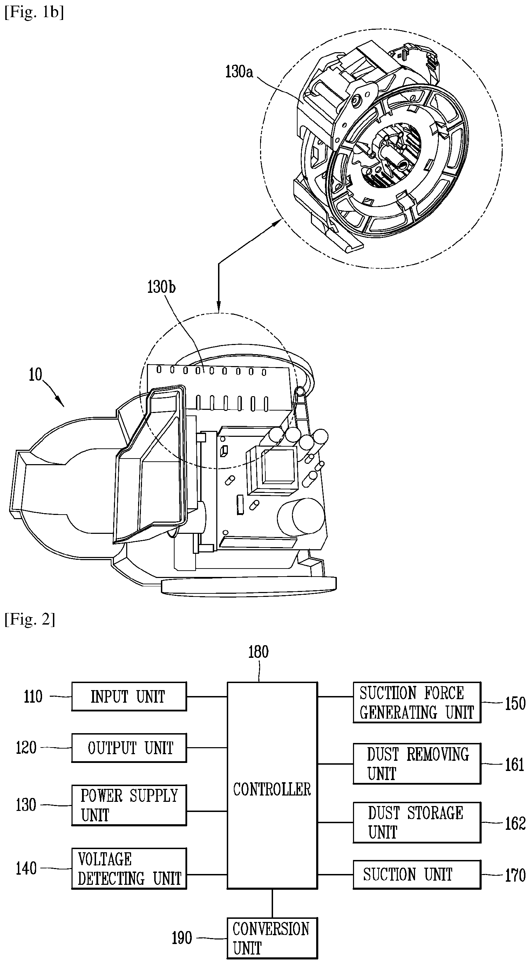

Referring to FIG. 1B, the detachable power supply unit 130 is illustrated.

As illustrated in FIG. 1B, the power supply unit 130 may be detachably provided in a portion of the cleaner body. In detail, any one of the first power supply module 130a and the second power supply module 130b may be detachably provided in a portion of the cleaner body.

For example, referring to FIG. 1B, the first power supply module 130a may be detachably provided in a portion of the cleaner body. In detail, any one of the first power supply module 130a and the second power supply module 130b may be detachably provided in a portion of the cleaner body.

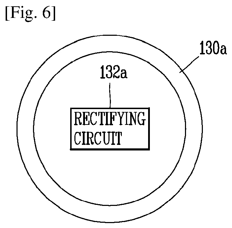

For example, referring to FIG. 1B, the first power supply module 130a may include a cord for receiving AC power from the commercial power source and a cord reel. Also, the second supply module 130b may be formed as a battery, and the battery may be detachably installed in a portion of the cleaner body. For reference, a detailed configuration of the first power supply module 130a will be described in detail with reference to FIG. 6.

FIG. 2 is a block diagram illustrating a configuration of a cleaner according to an embodiment of the present disclosure.

As illustrated in FIG. 2, the cleaner according to the present disclosure may include at least one of an input unit 110, an output unit 120, a power supply unit 130, a voltage detecting unit 140, a suction force generating unit 150, a dust removing unit 161, a dust storage unit 162, a suction unit 170, a controller 180, and a conversion unit 190. Hereinafter, the components included in the cleaner will be described in detail.

The input unit 110 receives various control commands regarding the cleaner from a user. The input unit 110 may include one or more buttons. For example, the input unit 110 may include an adjustment button for adjusting output of the cleaner, a power button for turning on and off power of the cleaner, and a mode setting button for selecting an operation mode of the cleaner.

Also, the input unit 110 may be installed in a handle portion of the suction unit 170. In addition, the input unit 110 may be installed as a hard key, a soft key, or a touch pad. For example, the input unit 110 may have a form of a touch screen together with the output unit 120.

Meanwhile, the output unit 120 may be installed in the cleaner body or in the handle portion of the suction unit 170. Here, an installation position or an installation form may be varied. For example, the output unit 120 may display information related to an output level, a battery state, or an operation mode on a screen.

Also, the output unit 120 may be provided as any one of a light emitting diode (LED), a liquid crystal display (LCD), a plasma display panel (PDP), and an organic light emitting diode (OLED).

The output unit 120 may further include an audio output unit audibly outputting information related to an operation of the cleaner performed by the controller 180. For example, the output unit 120 may output an alarm sound outwardly according to an alarm signal generated by the controller 180.

Here, the audio output unit may be a unit for outputting a sound such as a beeper, a speaker, and the like, and the output unit 120 may output audio data or a message data having a predetermined pattern stored in the memory (not shown) through the audio output unit.

As mentioned above, the power supply unit 130 may include at least one of the first and second power supply modules. The power supply unit 130 may be detachably attached to a portion of the cleaner body. The first power supply module or the second power supply module may be attached to a portion of the cleaner body according to a user selection. In addition, at least one terminal connected to the components of the cleaner may be provided in a portion of the cleaner body. For example, the components of the cleaner may include the suction force generating unit 150, the controller 180, the input unit 110, and the output unit 120.

As mentioned above, the suction force generating unit 150 may provide a suction force by the motor, and the motor may be a brushless DC motor used in general cleaners, but the present disclosure is not limited thereto.

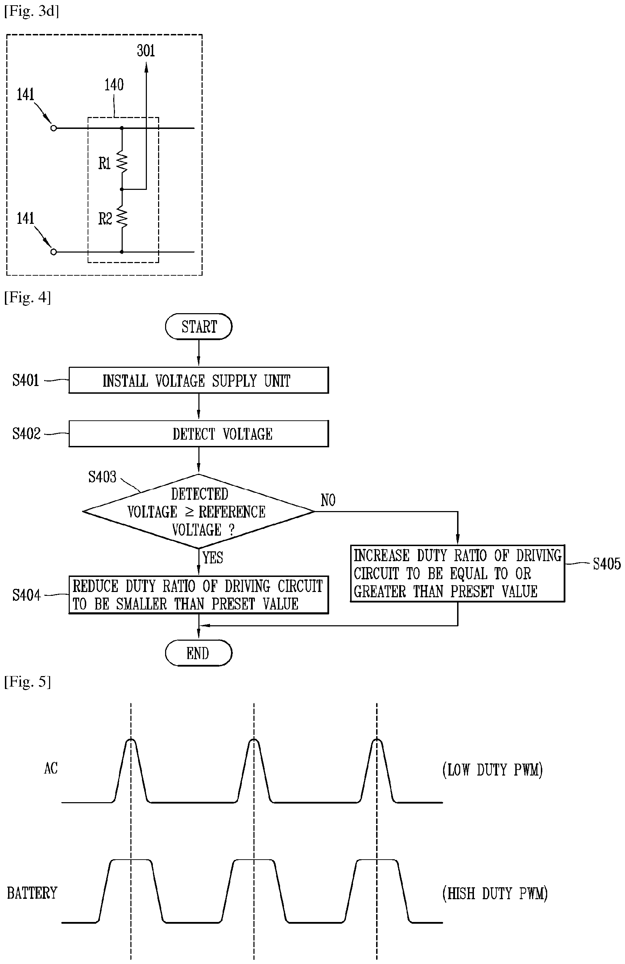

The voltage detecting unit 140 may detect a voltage applied to the suction force generating unit 150. The voltage detected by the voltage detecting unit 140 may be a voltage applied to a terminal of the suction force generating unit 150, and the voltage may be detected by a voltage sensor or a voltage measurement device. A specific configuration of the voltage detecting unit 140 will be described in detail with reference to FIG. 3D hereinafter.

Meanwhile, although not shown in FIG. 2, the cleaner according to the present disclosure may include a current detecting unit (not shown) for detecting a current of the motor. A motor current Idc detected by the current detecting unit may be a phase current of the motor or a current (i.e., an input current of an inverter, or the like) applied to the motor in proportion thereto, and the motor current Idc may be detected by a current sensor or a current measurement device.

The dust removing unit 161 and the dust storage unit 162 may be installed within or outside of the main body 10 such that it is easily coupled thereto or separated therefrom. For example, at least one of the dust removing unit 161 and the dust storage unit 152 may include a handle. The user may easily attach at least one of the dust removing unit 161 and the dust storage unit 162 to the main body 10 or easily detach the same therefrom.

Air introduced to the main body 10 may pass through the dust removing unit 161 and flow out of the main body 10. The dust removing unit 161 and the dust storage unit 162 may form a flow path of air.

Meanwhile, the dust storage unit 162 may include a case. That is, the dust storage unit 162 may include a container for storing dust. The case may be provided to communicate with the dust removing unit 161 and keep dust separated from the dust removing unit 161. That is, the case forms a space or region separated from the dust removing unit 161 and keeps dust therein.

The dust storage unit 162 may be provided to be installed substantially in a horizontal direction with respect to the main body 10. That is, the user may move the dust storage unit 162 in the horizontal direction so as to couple the dust storage unit 162 to the main body 10 or separate the dust storage unit 162 from the main body 10.

In detail, the dust storage unit 162 may communicate with the dust removing unit 161 and may be spatially separated from the dust removing unit 16. In other words, the dust storage unit 162 may be provided outside of the dust removing unit 161, and the dust removing unit 161 may be provided outside of the dust storage unit 162. To this end, the case of the dust storage unit 162 may include an accommodation portion for substantially accommodating the dust removing unit 161.

In a state in which the dust storage unit 162 is coupled to the main body 10, the dust removing unit 161 may be provided between the dust storage unit 162 and the main body 10. That is, the dust removing unit 161 is surrounded by the dust storage unit 162 and the main body 10. Thus, the dust removing unit 161 may be fixed to the main body 10 by the dust storage unit 162. The dust removing unit 161 may be provided between the dust storage unit 162 and the main body 10 so as not to be exposed outwardly from the cleaner 10.

The suction unit 170 may suck a cleaning target and transfer the same to the cleaner body.

The controller 180 controls a general operation of the components included in the cleaner. The controller 180 may provide or process information or function appropriate for a user by processing a signal, data, or information input or output through the aforementioned components or driving an application program stored in a memory (not shown).

Also, the controller 180 may control at least some of the components described above with reference to FIG. 2 in order to driving an application program stored in the memory. In addition, in order to drive the application program, the controller 180 may combine at least two or more components included in the cleaner and operate the same.

In detail, the controller 180 may detect whether the power supply unit 130 is attached or detached.

The controller 180 may detect information related to a type of the attached power supply unit 130.

The controller 180 may determine whether the power supply unit 130 corresponds to the first or the second power supply module. That is, the controller 180 may determine whether the power supply unit 130 attached to the main body is either the first or second power supply module.

When it is determined that the first power supply module is attached, the controller 180 may determine whether a cord included in the first power supply module is cut.

When it is determined that the second power supply module is attached, the controller 180 may determine remaining power capacity of the battery included in the second power supply module. In addition, the controller 180 may determine whether the second power supply module is required to be charged on the basis of the detected remaining power capacity.

Meanwhile, the controller 180 may determine whether at least a portion of a flow channel of air within the cleaner on the basis of an electrical signal detected with respect to the motor 150a. Here, a flow channel of air formed by a suction force of the motor may be an air flow channel of a movement path of air sequentially introduced through the suction nozzle of the suction unit 170, and discharged through the main body discharge portion through the main body suction opening and the suction force generating unit 150.

The conversion unit 190 may receive a certain voltage from the power supply unit 130, convert the applied voltage, and output an output voltage having a specific value.

In an embodiment, the conversion u nit 190 may receive a certain voltage from any one of the first and second power supply modules. In a case in which the first power supply module is attached to the cleaner body, the conversion unit 190 may convert a first voltage applied from the first power supply module into an output voltage having a specific value. Similarly, when the first power supply module is attached to the cleaner body, the conversion unit 190 may convert a second voltage applied from the second power supply module into an output voltage having a specific value.

For example, the conversion unit 190 may output an output voltage having a specific value, regardless of voltage value applied from the power supply unit 130. In another example, when it is determined that a voltage applied from the power supply unit 130 is included in a preset voltage range, the conversion unit 190 may output an output voltage having a specific value. Here, the controller 180 may set or change a specific voltage value of the output voltage of the conversion unit 190 on the basis of a user input.

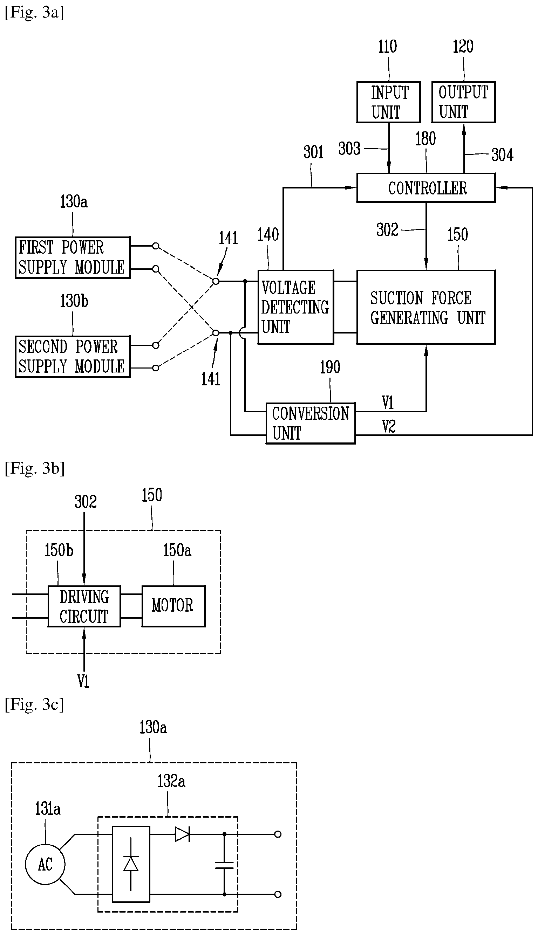

FIG. 3A is a block diagram illustrating a configuration of a cleaner that can be connected to a plurality of power supply modules according to an embodiment of the present disclosure.

As illustrated in FIG. 3A, the suction force generating unit 150 may be connected to at least one input terminal 141 to receive a driving voltage from the motor 150a. As described with reference to FIGS. 1A and 2, the input terminal 141 may be provided in a portion of the cleaner body to which the power supply unit 130 is attached.

The power supply unit 130 may apply a driving voltage to the suction force generating unit using any one of a DC voltage and an AC voltage.

In detail, any one of the first and second power supply modules 130a and 130b may be connected to the input terminal 141 according to a user selection. When the user attaches the first power supply module 130a to the main body, the suction force generating unit 150 may drive the motor using AC power. Also, when the user attaches the second power supply module 130b to the main body, the suction force generating unit 150 may drive the motor using DC power of the battery included in the second power supply module 130b.

The voltage detecting unit 140 may be disposed between the input terminal 141 and the suction force generating unit 150 to detect information related to a magnitude of a voltage applied to the input terminal 141. In this connection, referring to FIG. 3D, the voltage detecting unit 140 may be formed as at least one resistor. Also, the voltage detecting unit 140 may be connected in parallel to the input terminal 141 and the suction force generating unit 150.

For example, as illustrated in FIG. 3D, the voltage detecting unit 140 may include a first resistor R1 and a second resistor R2 connected in series. Also, both ends of the first and second resistors connected in series may be connected to both ends of the input terminal 141. The voltage detecting unit 140 may detect information related to a magnitude of a voltage applied to the input terminal 141 using a voltage applied to the first resistor R1 or a voltage applied to the second resistor R2.

In addition, the voltage detecting unit 140 may be connected (301) to the controller 180 to transfer the detected information related to the magnitude of the voltage to the controller 180.

The controller 180 may determine a type of the power supply unit 130 attached to the cleaner body on the basis of the detected information related to the magnitude of the voltage.

In detail, when the voltage detected by the voltage detecting unit 140 is equal to or greater than a reference voltage value, the controller 180 may determine that a type of the power supply unit 130 attached to the cleaner body is the first power supply module. Also, when the voltage detected by the voltage detecting unit 140 is lower than a reference voltage value, the controller 180 may determine that a type of the power supply unit 130 attached to the cleaner body is the second power supply module. Here, the reference voltage value may be set by the user.

Meanwhile, the controller 180 may determine a type of the power supply unit 130 attached to the main body using a plurality of reference voltage values. For example, when a voltage detected by the voltage detecting unit 140 is equal to or greater than a first reference voltage value, the controller 180 may determine that the first power supply module is attached to the main body, and when a voltage detected by the voltage detecting unit 140 is equal to or greater than a second reference voltage value, the controller 180 may determine that the second power supply module is attached to the main body,

In addition, when a voltage detected by the voltage detecting unit 140 is equal to or greater than a third reference voltage value greater than the first reference voltage value, the controller 180 may determine that both the first and second supply modules are attached to the main body. In an embodiment, the first and second power supply modules may be configured as an integrated module and attached to the main body. In another embodiment, the cleaner body may have a plurality of spaces for attaching and detaching the power supply unit 130, and in this case, the first and second power supply modules may be attached to the plurality of spaces, respectively.

Meanwhile, the conversion unit 190 may be connected to the input terminal 141 and output an output voltage V1 or V2 having at least one specific voltage value. In detail, the conversion unit 190 may convert a certain voltage applied to the input terminal 141 and output an output voltage having at least one specific voltage value.

Referring to FIG. 3A, when the power supply unit 130 including any one of the first and second power supply modules is connected to the input terminal 141, the conversion unit 190 may output an output voltage having at least one specific voltage value regardless of type of the connected power supply unit 130.

For example, as illustrated in FIG. 3A, when any one of the first and second power supply modules is connected to the input terminal 141, the conversion unit 190 may output a first output voltage V1 having a first voltage value and a second output voltage V2 having a second voltage value.

In this case, the conversion unit 190 may apply the first output voltage V1 to the suction force generating unit 150. Also, the conversion unit 190 may apply the second output voltage V2 to the controller 180. At least one of the controller 180 and the suction force generating unit 150 may be activated using an output voltage output from the conversion unit 190.

In detail, even though a magnitude of a voltage applied to the conversion unit 190 is changed, the conversion unit 190 may convert the applied voltage into a constant output voltage and activate at least one of the controller 180 and the suction force generating unit 150.

In an embodiment, the controller 180 may be activated after receiving the second output voltage V2 from the conversion unit 190. In another embodiment, a driving circuit included in the suction force generating unit 150 may be activated after receiving the first output voltage V1 from the conversion unit 190. For example, the driving circuit may be an inverter, and the inverter may use the first output voltage V1 as a bias voltage.

In another embodiment, the conversion unit 190 may include a switching mode power supply (SMPS).

The controller 180 activated as described above may control an operation of the suction force generating unit 150 on the basis of the voltage detected by the voltage detecting unit 140.

In detail, referring to FIG. 3B, the suction force generating unit 150 may include a driving circuit 150b and a motor 150a. The driving circuit 150b may be connected to the motor 150a, and generate a driving voltage applied to the motor 150. For example, the driving circuit 150b may be an inverter formed as at least one switch. In another example, the motor 150a may be a 3-phase motor, and in this case, the inverter may include a switching unit forming 3-level T-type topology.

Hereinafter, specific components of the suction force generating unit 150 will be described with reference to FIG. 3B.

As illustrated in FIG. 3B, the driving circuit 150b may receive the first output voltage V1 generated by the conversion unit 190. As mentioned above, the driving circuit may be activated by the first voltage V1. In addition, the driving circuit 150b may control an operation of a switching circuit (not shown) included in the driving circuit 150b on the basis of a control signal 302 applied from the controller 180.

In addition, on the basis of the voltage applied to the input terminal 141, the controller 180 may control the driving circuit using the control signal 302 to maintain an amount of current supplied to the motor to be smaller than a reference current value.

In detail, the controller 180 may adjust a duty ratio of the driving circuit, that is, a duty ratio of a switch provided in the driving circuit, on the basis of a magnitude of the voltage applied to the input terminal 141.

For example, when a voltage applied to the input terminal 141 is equal to or greater than a reference voltage, the controller 180 may reduce the duty ratio of the driving circuit 150b to be smaller than the preset value. When a voltage applied to the input terminal 141 is smaller than the reference voltage, the controller 180 may increase the duty ratio of the driving circuit 150b to be greater than the preset value.

In another example, when a voltage applied to the input terminal 141 is equal to or greater than the first reference voltage value, the controller 180 may control the driving circuit 150b such that the switch of the driving circuit 150b has a preset first duty ratio value. When a voltage applied to the input terminal 141 is smaller than the second reference voltage value, the controller 180 may control the driving circuit 150b such that the switch of the driving circuit 150b has a preset second duty ratio value. Here, the second duty ratio may be set to be greater than the first duty ratio value.

In another example, when it is determined that the first power supply module 130a is connected to the input terminal 141, the controller 180 may control the driving circuit 150b such that an amount of the current supplied to the motor 150a from the first power supply module 130a is maintained to be smaller than a reference current value.

In the embodiment, the controller 180 may maintain the amount of current supplied to the motor provided in the suction force generating unit 150 to be equal to or smaller than the reference current value, regardless of type of the power supply unit connected to the input terminal. For example, the reference current value may correspond to an available current value of the motor.

Specific components of the first power supply module 130a illustrated in FIG. 3A will be described with reference to FIG. 3C.

As illustrated in FIG. 3C, the first power supply module 130a may include an AC power connection unit 131a connected to an AC power source and a rectifying circuit 132a converting AC power into DC power.

In detail, the AC power connection unit 131a may include a cord and a cord reel. The AC power source connected to the AC power connection unit 131a may be a commercial power source.

Also, referring to FIG. 6, the rectifying circuit 132a may be installed in a hollow portion of the cord reel. Thus, a volume of the first power supply module of the cleaner according to the present disclosure may correspond to a volume of the cord reel.

Meanwhile, although not shown in FIGS. 1B and 6, the rectifying circuit 132a may be installed in a portion of the cord reel so as to be integrally formed with the cord reel. Accordingly, the rectifying circuit 132a may be provided in a portion of a space in which the cord reel is formed, without the necessity of a separate installation space.

In addition, even though a separate switch or sensor is not provided in a portion to which the power supply unit is connected, when any one of the first and second power supply modules is attached to the main body according to a user selection, the controller of the cleaner according to the present disclosure may control the suction force generating unit to supply a current having a value smaller than a reference current value to the motor.

Meanwhile, although not shown, the first power supply module 130a may further include a voltage level dropping unit (not shown) for dropping a voltage level of DC power converted by the rectifying circuit 132qa. The voltage level dropping unit may also be installed in the hollow portion of the cord reel. Thus, an amount of current supplied to the suction force generating unit may be appropriately maintained, without having to update software controlling an operation of the cleaner.

Hereinafter, a specific configuration of the voltage detecting unit 140 illustrated in FIG. 3A will be described with reference to FIG. 3D.

As illustrated in FIG. 3D, the voltage detecting unit 140 may be provided as at least one resistor. For example, referring to FIG. 3D, the voltage detecting unit 140 may be formed as a serial connector including a first resistor R1 and a second resistor R2.

Here, both ends of the serial connector including the first resistor R1 and the second resistor R2 may be connected to both ends of the input terminals 141 connected to the power supply unit, respectively. Also, the both ends of the serial connector including the first and second resistors may be connected to the suction force generating unit 150.

Also, a mutual connection portion of the first resistor R1 and the second resistor R2 may be connected to the controller 180, and the controller 180 may receive a signal 301 including information related to a voltage applied to the suction force generating unit 150 from the power supply unit 130, from the mutual connection portion of the first and second resistors. For example, the signal 301 transferred from the voltage detecting unit 140 to the controller 180 may include information related to a magnitude of a voltage applied to the suction force generating unit 150.

Hereinafter, an embodiment of the cleaner according to the present disclosure illustrated in FIG. 3A will be described together with specific components of the first power supply module 130a, the voltage detecting unit 140a, and the suction force generating unit 150 described above with reference to FIGS. 3B to 3D.

When the first power supply module 130a is installed in the main body, the controller 180 may reduce current generated by AC power transferred from the first power supply module. Thus, the controller 180 may control the driving circuit of the suction force generating unit 150 such that an amount of current supplied to the motor included in the suction force generating unit 150 is maintained to be smaller than a reference current value.

That is, when it is determined that the first power supply module 130a is installed in the main body, the controller 180 may control the driving circuit 150b such that a duty ratio of the driving circuit 150b is smaller than a preset duty ratio.

Also, when the second power supply module 130b is installed in the main body, the controller 180 may maintain a current generated by the battery included in the second power supply module. That is, when it is determined that the second power supply module is installed in the main body, the controller 180 may control the driving circuit 150b such that a duty ratio of the driving circuit 150b is grater than a preset duty ratio value.

The controller 180 determines whether the power supply unit 130 installed in the main body is the first or second power supply module, and control the output unit 120 to output information related to the determination result. In addition, the controller 180 may control the output unit 120 to output information related to a duty ratio of the driving circuit 150b.

Meanwhile, the controller 180 may control the duty ration of the driving circuit 150b on the basis of a user input applied from the input unit 110. IN this case, the controller 810 may control the duty ration of the driving circuit 150b on the basis of a user input of selecting any one of the battery and the commercial power source without determining a type of the power supply unit 130.

Hereinafter, an embodiment related to a control method of a cleaner of the present disclosure will be described with reference to FIG. 4.

First, the power supply unit 130 may be installed in the main body of the cleaner (S401). That is, at least one of the first and second power supply modules 130a and 130b may be installed in the input terminal of the main body of the cleaner.

Next, the voltage detecting unit 140 may detect a voltage applied to the suction force generating unit 150.

When the power supply unit 130 is installed in the input terminal, the controller 180 may determine whether a detected voltage is equal to or greater than a reference voltage value (S403).

When the detected voltage is equal to or greater than the reference voltage value, the controller 180 may reduce a duty ratio of the driving circuit to be reduced to be smaller than a preset duty ratio value (S404). Conversely, when the detected voltage is smaller than the reference voltage value, the controller 180 may increase the duty ratio of the driving circuit to be equal to or greater than the preset duty ratio value (S405).

Referring to FIG. 5, a graph illustrating duty ratios of the driving circuit adjusted by the controller 180 according to types (AC and BATTERY) of the power supply unit 130 installed in the input terminal of the main body is shown.

As described above, even though the cleaner according to the present disclosure may be used in both an AC power source and a DC power source, it has the main body formed to have a minimized volume and weight, manufacturing cost thereof may be reduced.

Also, according to the present disclosure, since the user may select any one of an AC power source and a DC power source as a supply power source by simply replacing the power supply unit, user convenience can be increased.

Also, according to the present disclosure, the cleaner can be used in both the AC power source and the DC power source with respect to the same motor, even without a separate switch circuit or an AC/DC detecting sensor for discriminating an AC power source and a DC power source.

Also, according to the present disclosure, since the user may simply change a scheme of power supply, utilization coverage of the cleaner may be maximized.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A cleaner comprising:
a suction nozzle (170a) sucking a cleaning target;
a suction connection part (170c) connected to the suction nozzle and allowing the sucked cleaning target to pass therethrough; and
a main body (10) spaced apart from the suction nozzle and having a dust box collecting the cleaning target,
wherein the main body includes:
a suction force generating unit (150) installed in the main body to generate a suction force;
a power supply unit (130) detachably provided in the main body to apply a voltage to the suction force generating unit;
a voltage detecting unit (140) detecting a voltage applied from the power supply unit to the suction force generating unit; and
a controller (180) controlling an operation of the suction force generating unit on the basis of the detected voltage,
wherein the suction force generating unit (150) includes:
a motor (150a) generating the suction force; and
a driving circuit (150b) applying a driving voltage to the motor,
wherein the power supply unit (130) includes at least one of a first power supply module (130a) and a second power supply module (130b) and supplies power to the suction force generating unit using any one of a DC voltage supplied from the second power supply module and an AC voltage supplied from the first power supply module, and
wherein the controller (180) is further configured to:
when the voltage detected by the voltage detecting unit (140) is equal to or greater than a reference voltage value, determine that a type of the power supply unit (130) attached to the main body (10) is the first power supply module (130a),
when the voltage detected by the voltage detecting unit (140) is lower than the reference voltage value, determine that a type of the power supply unit (130) attached to the main body is the second power supply module (130b),
when the power supply unit supplies an output voltage greater than a reference voltage to the suction force generating unit (150) using an AC voltage or when the power supply unit (130) supplies power to the suction force generating unit using a DC voltage, adjusts a duty ratio of the driving circuit (150b) such that an amount of current supplied to the motor (150a) is maintained to be smaller than a reference current value,
when it is determined that the first power supply module (130a) is installed in the main body, control the driving circuit such that a duty ratio of the driving circuit is smaller than a preset duty ratio, and
when it is determined that the second power supply module (130b) is installed in the main body, control the driving circuit (150b) such that a duty ratio of the driving circuit is greater than the preset duty ratio.

2. The cleaner of claim 1, wherein the controller (180) adjusts the duty ratio of the driving circuit on the basis of a magnitude of the applied voltage.

3. The cleaner of claim 2, wherein when the applied voltage is equal to or greater than the reference voltage value, the controller (180) reduces the duty ratio of the driving circuit to be smaller than a preset value.

4. The cleaner of claim 2, wherein when the applied voltage is smaller than the reference voltage value, the controller (180) controls the driving circuit to increase the duty ratio thereof to be equal to or greater than the preset value.

5. The cleaner of claim 1, wherein the first power supply module applies AC power transferred from an external power source to the suction force generating unit.

6. The cleaner of claim 5, wherein when the first power supply module is installed in the main body, the controller controls the driving circuit to reduce a current generated by the AC power to maintain an amount of current supplied to the motor to be smaller than the reference current value.

7. The cleaner of claim 5, wherein the first power supply module includes:
a cord provided to receive AC power; and
a cord reel provided to allow the cord to be wound therearound within the main body.

8. The cleaner of claim 6, wherein the first power supply module further includes:
a rectifying circuit (132a) converting the AC power into DC power,
wherein the rectifying circuit is installed in a hollow portion of the cord reel.

9. The cleaner of claim 1, wherein the second power supply module has a battery, and the second power supply module applies DC power generated in the battery to the motor.

10. The cleaner of claim 9, wherein when the second power supply module is installed in the main body, the controller controls the driving circuit such that a duty ratio of the driving circuit is greater than a preset duty ratio value.

11. The cleaner of claim 1, further comprising:
a dust removing unit (161) removing dust included in sucked air from the air; and
a dust storage unit (162) storing the removed dust,
wherein the suction force generating unit, the dust removing unit, and the dust storage unit are installed within the main body.

12. The cleaner of claim 1, further comprising:
a conversion unit (190) outputting a specific voltage value using a voltage applied from the voltage supply unit,
wherein at least one of the controller and the suction force generating unit is activated using a specific voltage value output from the conversion unit.

## Patentansprüche

1. Reiniger, der aufweist:
eine Saugdüse (170a), die ein Reinigungsziel einsaugt;
ein Saugverbindungsteil (170c), der mit der Saugdüse verbunden ist und es ermöglicht, dass das eingesaugte Reinigungsziel durch diesem hindurch geht; und
einen Hauptkörper (10), der von der Saugdüse beabstandet ist und einen Staubbehälter aufweist, der das Reinigungsziel sammelt,
wobei der Hauptkörper aufweist:
eine Saugkrafterzeugungseinheit (150), die in den Hauptkörper installiert ist, um eine Saugkraft zu erzeugen;
eine Stromversorgungseinheit (130), die abnehmbar im Hauptkörper vorgesehen ist, um eine Spannung an die Saugkrafterzeugungseinheit anzulegen;
eine Spannungserfassungseinheit (140), die eine von der Stromversorgungseinheit an die Saugkrafterzeugungseinheit angelegte Spannung erfasst; und
eine Steuereinrichtung (180), die einen Betrieb der Saugkrafterzeugungseinheit auf der Grundlage der erfassten Spannung steuert,
wobei die Saugkrafterzeugungseinheit (150) aufweist:
einen Motor (150a), der die Saugkraft erzeugt; und
eine Ansteuerschaltung (150b), die eine Ansteuerspannung an den Motor anlegt,
wobei die Stromversorgungseinheit (130) ein erstes Stromversorgungsmodul (130a) und/oder ein zweites Stromversorgungsmodul (130b) aufweist und unter Verwendung irgendeiner vom zweiten Stromversorgungsmodul zugeführten Gleichspannung und/oder vom ersten Stromversorgungsmodul zugeführten Wechselspannung Strom an die Saugkrafterzeugungseinheit liefert, und
wobei die Steuereinrichtung (180) ferner konfiguriert ist:
wenn die durch die Spannungserfassungseinheit (140) erfasste Spannung größer oder gleich einem Referenzspannungswert ist, festzustellen, dass ein Typ der an den Hauptkörper (10) angeschlossenen Stromversorgungseinheit (130) das erste Stromversorgungsmodul (130a) ist,
wenn die durch die Spannungserfassungseinheit (140) erfasste Spannung niedriger als Referenzspannungswert ist, festzustellen, dass ein Typ der an den Hauptkörper angeschlossenen Stromversorgungseinheit (130) das zweite Stromversorgungsmodul (130b) ist,
wenn die Stromversorgungseinheit eine größere Ausgangsspannung als eine Referenzspannung an die Saugkrafterzeugungseinheit (150) unter Verwendung einer Wechselspannung liefert, oder
wenn die Stromversorgungseinheit (130) Strom an die Saugkrafterzeugungseinheit unter Verwendung einer Gleichspannung liefert, ein Tastverhältnis der Ansteuerschaltung (150b) so einstellt, dass eine dem Motor (150a) zugeführte Strommenge kleiner als ein Referenzstromwert gehalten wird,
wenn festgestellt wird, dass das erste Stromversorgungsmodul (130a) im Hauptkörper installiert ist, die Ansteuerschaltung so zu steuern, dass ein Tastverhältnis der Ansteuerschaltung kleiner als ein voreingestelltes Tastverhältnis ist, und
wenn festgestellt wird, dass das zweite Stromversorgungsmodul (130b) im Hauptkörper installiert ist, die Ansteuerschaltung (150b) so zu steuern, dass ein Tastverhältnis der Ansteuerschaltung größer als das voreingestellte Tastverhältnis ist.

2. Reiniger nach Anspruch 1, wobei die Steuereinrichtung (180) das Tastverhältnis der Ansteuerschaltung auf der Grundlage einer Größe der angelegten Spannung einstellt.

3. Reiniger nach Anspruch 2, wobei wenn die angelegte Spannung größer oder gleich dem Referenzspannungswert ist, die Steuereinrichtung (180) das Tastverhältnis der Ansteuerschaltung so reduziert, dass es kleiner als ein voreingestellter Wert ist.

4. Reiniger nach Anspruch 2, wobei wenn die angelegte Spannung kleiner als der Referenzspannungswert ist, die Steuereinrichtung (180) die Ansteuerschaltung steuert, um deren Tastverhältnis so zu erhöhen, dass es größer oder gleich dem voreingestellten Wert ist.

5. Reiniger nach Anspruch 1, wobei das erste Stromversorgungsmodul von einer äußeren Stromquelle übertragenen Wechselstrom an die Saugkrafterzeugungseinheit anlegt.

6. Reiniger nach Anspruch 5, wobei wenn das erste Stromversorgungsmodul im Hauptkörper installiert ist, die Steuereinrichtung die Ansteuerschaltung steuert, einen durch den Wechselstrom erzeugten Strom zu reduzieren, um eine dem Motor zugeführte Strommenge kleiner als den Referenzstromwert zu halten.

7. Reiniger nach Anspruch 5, wobei das erste Stromversorgungsmodul aufweist:
ein Kabel, das zur Aufnahme von Wechselstrom vorgesehen ist; und
eine Kabeltrommel, die zum Aufwickeln des Kabels darum im Hauptkörper vorgesehen ist.

8. Reiniger nach Anspruch 6, wobei das erste Stromversorgungsmodul ferner aufweist:
eine Gleichrichterschaltung (132a), die den Wechselstrom in Gleichstrom umwandelt,
wobei die Gleichrichterschaltung in einem hohlen Abschnitt der Kabeltrommel installiert ist.

9. Reiniger nach Anspruch 1, wobei das zweite Stromversorgungsmodul eine Batterie aufweist, und das zweite Stromversorgungsmodul in der Batterie erzeugten Gleichstrom an den Motor angelegt.

10. Reiniger nach Anspruch 9, wobei wenn das zweite Stromversorgungsmodul im Hauptkörper installiert ist, die Steuereinrichtung die Ansteuerschaltung so steuert, dass ein Tastverhältnis der Ansteuerschaltung größer als ein voreingestellter Tastverhältniswert ist.

11. Reiniger nach Anspruch 1, der ferner aufweist:
eine Staubentfernungseinheit (161), die in der angesaugten Luft enthaltenen Staub entfernt; und
eine Staubspeichereinheit (162), die den entfernten Staub speichert,
wobei die Saugkrafterzeugungseinheit, die Staubentfernungseinheit und die Staubspeichereinheit im Hauptkörper installiert sind.

12. Reiniger nach Anspruch 1, der ferner aufweist:
eine Umwandlungseinheit (190), die einen spezifischen Spannungswert unter Verwendung einer von der Spannungsversorgungseinheit angelegten Spannung abgibt,
wobei die Steuereinrichtung und/oder die Saugkrafterzeugungseinheit unter Verwendung eines spezifischen Spannungswerts aktiviert werden, der aus der Umwandlungseinheit ausgegeben wird.

## Revendications

1. Aspirateur, comprenant :
un suceur (170a) aspirant une cible d'aspiration ;
une section de connexion (170c) au suceur raccordée au suceur et permettant le passage de la cible d'aspiration aspirée ; et
un corps principal (10) distant du suceur et présentant un bac à poussière pour recueillir la cible d'aspiration,
le corps principal présentant :
une unité génératrice de force d'aspiration (150) montée dans le corps principal pour générer une force d'aspiration ;
une unité d'alimentation en courant (130) prévue de manière amovible dans le corps principal pour appliquer une tension sur l'unité génératrice de force d'aspiration ;
une unité de détection de tension (140) détectant une tension appliquée par l'unité d'alimentation en courant sur l'unité génératrice de force d'aspiration ; et
un contrôleur (180) commandant le fonctionnement de l'unité génératrice de force d'aspiration sur la base de la tension détectée,
l'unité génératrice de force d'aspiration (150) présentant :
un moteur (150a) générant la force d'aspiration ; et
un circuit de commande (150b) appliquant une tension de commande sur le moteur,
l'unité d'alimentation en courant (130) comprenant un premier module d'alimentation en courant (130a) et/ou un deuxième module d'alimentation en courant (130b), et alimentant en courant l'unité génératrice de force d'aspiration au moyen soit d'une tension continue fournie par le deuxième module d'alimentation en courant, soit d'une tension alternative fournie par le premier module d'alimentation en courant, et
le contrôleur (180) étant en outre prévu pour :
si la tension détectée par l'unité de détection de tension (140) est égale ou supérieure à une valeur de tension de référence, déterminer qu'un type d'unité d'alimentation en courant (130) fixée au corps principal (10) est le premier module d'alimentation en courant (130a),
si la tension détectée par l'unité de détection de tension (140) est inférieure à la valeur de tension de référence, déterminer qu'un type d'unité d'alimentation en courant (130) fixée au corps principal est le deuxième module d'alimentation en courant (130b),
si l'unité d'alimentation en courant fournit une tension de sortie supérieure à une tension de référence à l'unité génératrice de force d'aspiration (150) au moyen d'une tension alternative, ou
si l'unité d'alimentation en courant (130) fournit un courant à l'unité génératrice de force d'aspiration au moyen d'une tension continue, régler un rapport cyclique du circuit de commande (150b) de manière à maintenir une valeur de courant fourni au moteur (150a) inférieure à une valeur de courant de référence,
s'il est déterminé que le premier module d'alimentation en courant (130a) est monté dans le corps principal, commander le circuit de commande pour qu'un rapport cyclique du circuit de commande soit inférieur à un rapport cyclique défini, et
s'il est déterminé que le deuxième module d'alimentation en courant (130b) est monté dans le corps principal, commander le circuit de commande (150b) pour qu'un rapport cyclique du circuit de commande soit supérieur au rapport cyclique défini.

2. Aspirateur selon la revendication 1, où le contrôleur (180) règle le rapport cyclique du circuit de commande sur la base d'une amplitude de la tension appliquée.

3. Aspirateur selon la revendication 2, où, si la tension appliquée est égale ou supérieure à la valeur de tension de référence, le contrôleur (180) ramène le rapport cyclique du circuit de commande à une valeur inférieure à une valeur définie.

4. Aspirateur selon la revendication 2, où, si la tension appliquée est inférieure à la valeur de tension de référence, le contrôleur (180) commande le circuit de commande pour que celui-ci ait un rapport cyclique égal ou supérieur à la valeur définie.

5. Aspirateur selon la revendication 1, où le premier module d'alimentation en courant applique un courant alternatif provenant d'une source de puissance extérieure à l'unité génératrice de force d'aspiration.

6. Aspirateur selon la revendication 5, où, si le premier module d'alimentation en courant est monté dans le corps principal, le contrôleur commande la réduction par le circuit de commande d'un courant généré par le courant alternatif pour maintenir une valeur de courant fourni au moteur inférieure à la valeur de courant de référence.

7. Aspirateur selon la revendication 5, où le premier module d'alimentation en courant comprend :
un cordon prévu pour recevoir un courant alternatif ; et
un enrouleur de cordon prévu pour permettre l'enroulement du cordon à l'intérieur du corps principal.

8. Aspirateur selon la revendication 6, où le premier module d'alimentation en courant comprend en outre :
un circuit redresseur (132a) convertissant le courant alternatif en courant continu,
ledit circuit redresseur étant monté dans une partie creuse de l'enrouleur de cordon.

9. Aspirateur selon la revendication 1, où le deuxième module d'alimentation en courant est pourvu d'une batterie, et où le deuxième module d'alimentation en courant applique un courant continu généré dans la batterie sur le moteur.

10. Aspirateur selon la revendication 9, où, si le deuxième module d'alimentation en courant est monté dans le corps principal, le contrôleur commande le circuit de commande pour qu'un rapport cyclique du circuit de commande soit supérieur à une valeur de rapport cyclique définie.

11. Aspirateur selon la revendication 1, comprenant en outre :
une unité de filtrage de poussière (161) filtrant les poussières contenues dans l'air aspiré ; et
une unité de stockage de poussière (162) recueillant les poussières extraites,
l'unité génératrice de force d'aspiration, l'unité de filtrage de poussière et l'unité de stockage de poussière étant montées à l'intérieur du corps principal.

12. Aspirateur selon la revendication 1, comprenant en outre :
une unité de conversion (190) fournissant une valeur de tension spécifique au moyen d'une tension appliquée par l'unité d'alimentation en tension,
le contrôleur et/ou l'unité génératrice de force d'aspiration étant activés au moyen d'une valeur de tension spécifique appliquée par l'unité de conversion.
